# EUROPÄISCHE PATENTSCHRIFT

(11) **EP 0 908 082 B1**
(45) Veröffentlichungstag und Bekanntmachung des Hinweises auf die Patenterteilung: **21.11.2001**
(21) Anmeldenummer: 98117520.1
(22) Anmeldetag: 15.09.1998
(51) Int. Cl.: A01B 59/00, A01B 61/02

(54) **Anschlussvorrichtung für landwirtschaftliche Geräte**
Agricultural implement connecting device
Dispositif de connection pour outil agricole

(30) Priorität: 16.09.1997 DE 29716594 U
(43) Veröffentlichungstag der Anmeldung: 14.04.1999
(73) Patentinhaber: NIEMEYER Landmaschinen GmbH, D-48477 Hörstel-Riesenbeck (DE)
(72) Erfinder: Laumann, Bernhard, 48477 Hörstel-Riesenbeck (DE)

(56) Entgegenhaltungen:
- DE-A- 4 136 515
- GB-A- 1 130 966
- US-A- 3 812 916

## Beschreibung

Die Erfindung betrifft eine Vorrichtung für landwirtschaftliche Geräte zu deren Anschluß und die Unterlenker eines Dreipunktgestänges eines Traktors od. dgl. Zugfahrzeugs in einer Ausbildung gemäß dem Oberbegriff des Anspruchs 1.

Ausgehend von einer bekannten Vorrichtung dieser Art (DE 296 15 285 U1) befaßt sich die Erfindung mit dem Problem der Bewältigung von Spitzenbelastungen, die bei Arbeits- oder Transportfahrten auf die Unterlenkeranschlußzapfen der Geräteanschlußachse einwirken.

Die Erfindung löst das Problem durch eine Vorrichtung mit den Merkmalen des Anspruchs 1 oder 2. Hinsichtlich weiterer Ausgestaltungen wird auf die Ansprüche 2 bis 9 verwiesen.

Durch die Ausstattung der Geräteanschlußachse mit einem Bereich, der sich bei entsprechender Belastung der Unterlenkeranschlußzapfen im Betrieb elastisch verformen kann, werden sonst auftretende Spannungsspitzen vermieden und Stoßbelastungen federnd aufgefangen. Wird der Bereich herabgesetzten Biegewiderstands durch einen gegenüber benachbarten Bereichen der Geräteanschlußachse verminderten Querschnitt gebildet, werden die Übergangszonen vom Ausgangsquerschnitt zum reduzierten Querschnitt zweckmäßig nach den Regeln der Spannungsminimierung gestaltet, wobei als Werkstoff ein solcher verwendet wird, der zwar durch elastische Verformungsarbeit Stoßenergie aufnehmen kann, nicht jedoch den Bereich plastischer Verformung erreicht. Der Werkstoff sollte dabei über ausreichende Bruchdehnungseigenschaften verfügen, damit im Falle einer Überbeanspruchung der Geräteanschlußachse eine bleibende Verformung als Signal für die eingetretene Überbeanspruchung eintritt und das Auftreten eines Bruches möglichst vermieden ist.

Weitere Einzelheiten und Wirkungen der Erfindung ergeben sich aus der nachfolgenden Beschreibung und der Zeichnung, in der zwei Ausführungsbeispiele des Gegenstands der Erfindung schematisch näher dargestellt sind. In der Zeichnung zeigt:
- Fig. 1: eine Ansicht entgegen der Fahrtrichtung einer Vorrichtung nach der Erfindung an einem Drehpflug,
- Fig. 2: eine Geräteanschlußachse im montierten Zustand mit kontinuierlicher Querschnittsminderung im Bereich herabgesetzten Biegewiderstands,
- Fig. 3: eine Geräteanschlußachse im montierten Zustand mit abgestufter Querschnittsminderung im Bereich herabgesetzten Biegewiderstands,
- Fig. 4: eine Einzeldarstellung einer Geräteanschlußachse mit ebenfalls kontinuierlicher Querschnittsveränderung im Bereich herabgesetzten Biegewiderstands,
- Fig. 5: eine Einzeldarstellung einer Geräteanschlußachse mit abgestufter Querschnittsveränderung im Bereich herabgesetzten Biegewiderstands,
- Fig. 6: einen Schnitt nach der Linie X-X in Fig. 9 durch ein Stützlager in Radial-Gelenk-Ausführung,
- Fig. 7: einen Schnitt nach der Linie X-X in Fig. 9 durch ein Stützlager in Form einer Aufnahmebohrung,
- Fig. 8: einen vergrößerten Schnitt durch die Stützlagerlasche in Fig. 7 und
- Fig. 9: eine schematische, abgebrochene Draufsicht auf einen erfindungs-gemäß an einen Traktor angeschlossenen Drehpflug gemäß Fig. 1 als Anwendungsbeispiel für ein landwirtschaftliches Gerät.

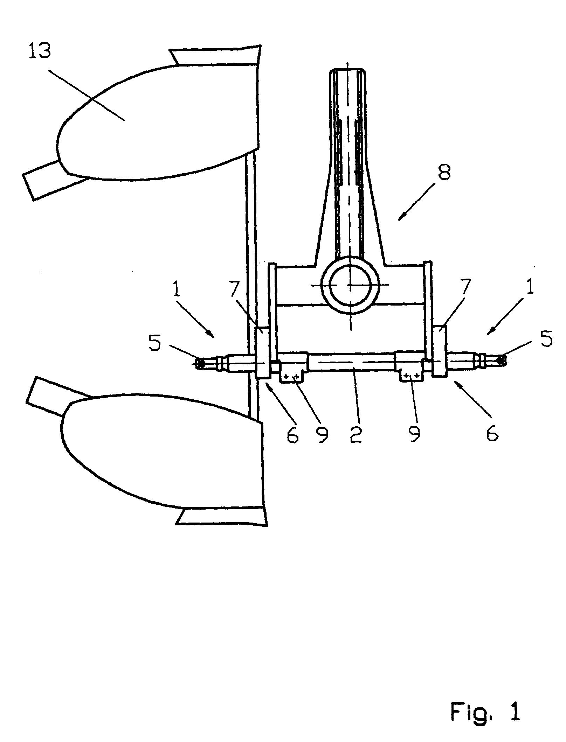

Fig. 1 veranschaulicht in einer Ansicht entgegen der Fahrtrichtung (F) eine geräteseitige Anschlußvorrichtung (1) in Form einer durchgehenden Geräteanschlußachse (2) an einem Beispiel eines Drehpflug (13), als Beispiel für ein landwirtschaftliches Gerät. Die Geräteanschlußachse (2) mit ihren Unterlenkeranschlußzapfen (5) ist in mit dem Tragbock (8) des Drehpfluges (13) verschraubten Laschen (7) abgestützt und durch Klemmstücke (9) axial gesichert. Die Geräteanschlußachse (2) ist bei dieser Darstellung durchgehend ohne Querschnittsminderung ausgeführt und hat im mittleren, zwischen den Stützlagern (6) befindlichen Bereich einen dadurch herabgesetzten Biegewiderstand, daß das Material in diesem Bereich einen gegenüber dem Material der übrigen Achse geringeren Elastizitätsmodul aufweist. Dies kann durch beispielsweise unterschiedliche Härtung oder auch durch zwischengefügten anderen Werkstoff herbeigeführt sein.

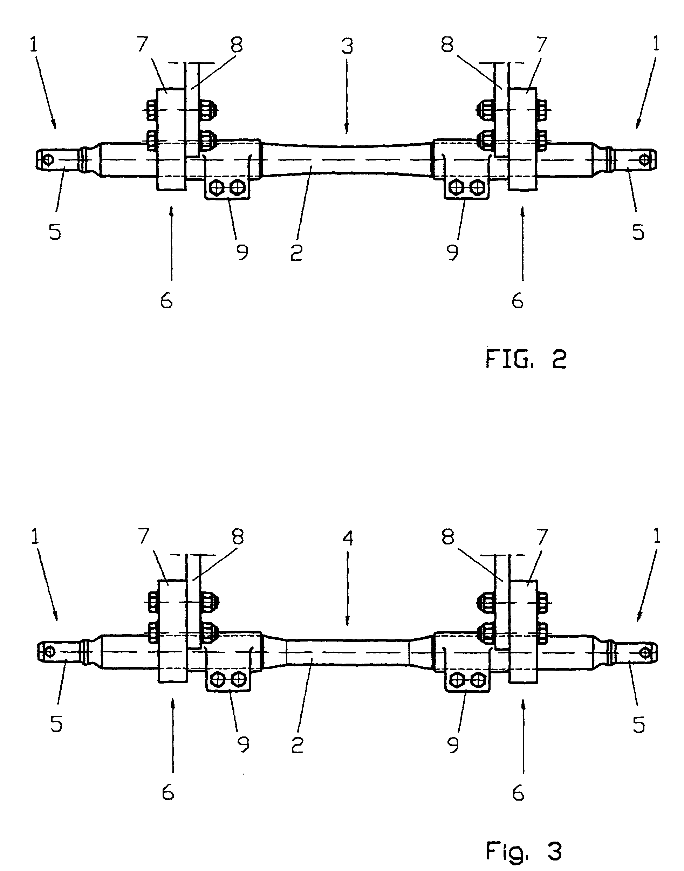

Fig. 2 zeigt eine Geräteanschlußachse (2) mit kontinuierlich verlaufender Querschnittsminderung (3) im mittleren Bereich zwischen den Stützlagern (6), welche die Biegesteifigkeit der Geräteanschlußachse (2) in diesem Bereich herabsetzt.

Fig. 3 zeigt eine abgestuft verlaufende Querschnittsminderung (4) im mittleren Bereich der Geräteanschlußachse (2) mit konisch ausgebildeten Übergangsbereichen (19) vom Ausgangsquerschnitt (A₁) auf den kleinsten Querschnitt (A₂).

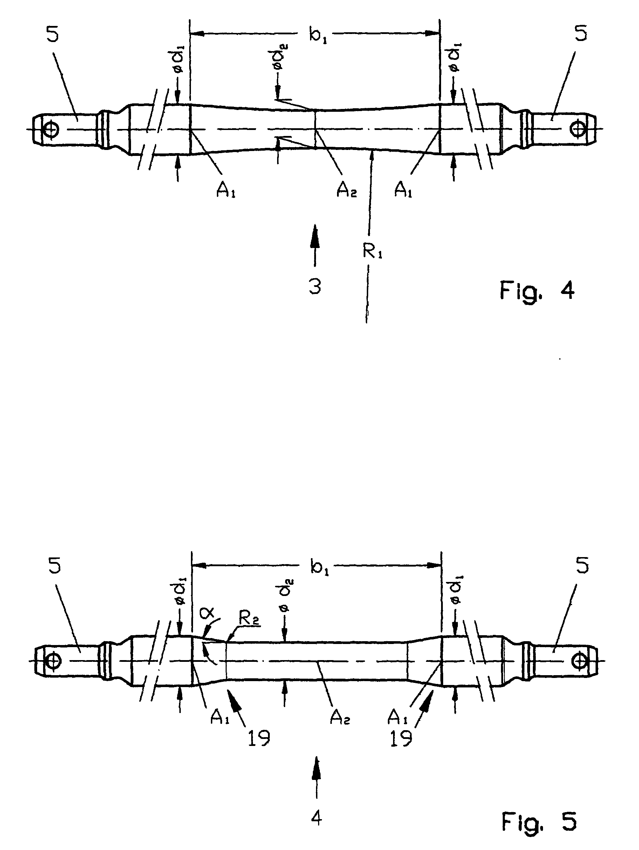

Fig. 4 zeigt Details einer Ausführung einer Geräteanschlußachse (2) mit einem Bereich kontinuierlich verlaufender Querschnittsminderung (3). Diese erstreckt sich über den Bereich mit der Länge b₁, beispielsweise 300 mm, beginnend und endend in den Ausgangsquerschnitten A₁ mit dem Ausgangsdurchmesser d₁, beispielsweise 60 mm, und erreicht den kleinsten Querschnitt A₂ mit dem kleinsten Durchmesser d₂ auf der halben Länge des Bereichs der Querschnittsminderung b₁, beispielsweise 45 mm. Die Kontur des sich kontinuierlich verändernden Achsendurchmessers ist abhängig von den geometrischen Randbedingungen mit den Parametern d₁, d₂, b₁ und wird in diesem Ausführungsbeispiel bestimmt durch einen Konturradius R₁ = 1504 m.

Fig. 5 zeigt Details eines Ausführungsbeispiels einer Geräteanschlußachse (2) mit einer abgestuft verlaufenden Querschnittsminderung (4) zur Bildung des Bereichs herabgesetzten Biegewiderstands. Sie erstreckt sich über den Bereich (b₁), beispielsweise von 300 mm Länge, der Geräteanschlußachse (2). Sie beginnt und endet in den Ausgangsquerschnitten (A₁) mit dem Ausgangsdurchmesser (d₁), beispielsweise 60 mm, hat im konisch verlaufenden Übergangsbereichs (19) einen Böschungswinkel (α) von etwa 5° bis 15°, vorzugsweise 10°, und umfaßt einen zylindrischen Schaftteil mit dem kleinsten Querschnitt (A₂) und dem kleinsten Durchmesser (d₂), beispielsweise von 45 mm. Der Übergangsradius (R₂) vom konischen zum zylindrischen Bereich der Achse beträgt 10 bis 30 mm, vorzugsweise 20 mm.

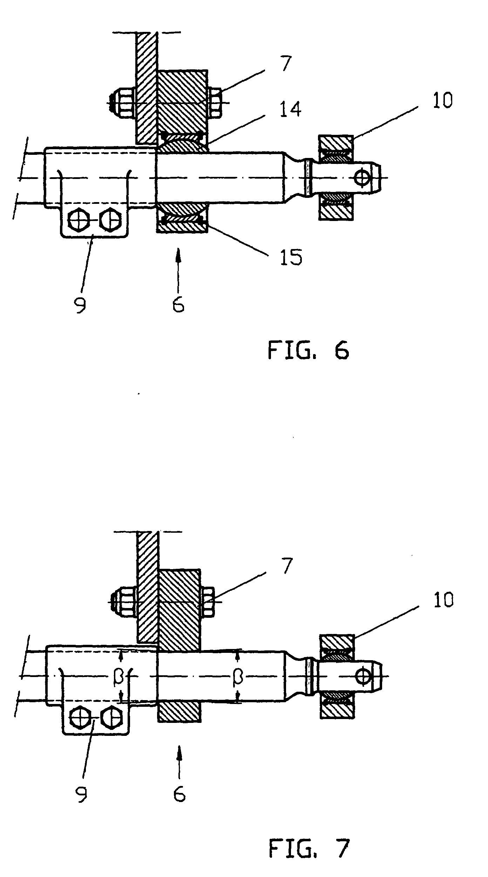

Fig. 6 zeigt eine mögliche Ausführungsform des Stützlagers (6) mit gelenkiger Lagerung der Geräteanschlußachse (2). In der Durchgangsbohrung (16) der Lasche (7) befindet sich ein Radial-Gelenklager (14), welches mit Sicherungsringen (15) axial fixiert ist. Diese räumlich gelenkige Lagerung begünstigt das Verformungsverhalten der Geräteanschlußachse (2) in den Bereichen der Stützlager (6), da sie Behinderungen der Verformung durch eine Einspannung der Geräteanschlußachse (2) im Bereich der Durchgangsbohrung (16) des Stützlagers (6) ausschließt.

Fig. 7 zeigt einen Schnitt durch ein Stützlager (6) mit angenähert gelenkiger Lagerung der Geräteanschlußachse (2). Die Durchgangsbohrung (16) der Lasche (7) ist beidseitig in Richtung ihrer Austrittsöffnungen konisch erweitert, so daß auch in dieser Ausführung das Verformungsverhalten der Achse (2) von den Stützlagern (6) begünstigt wird.

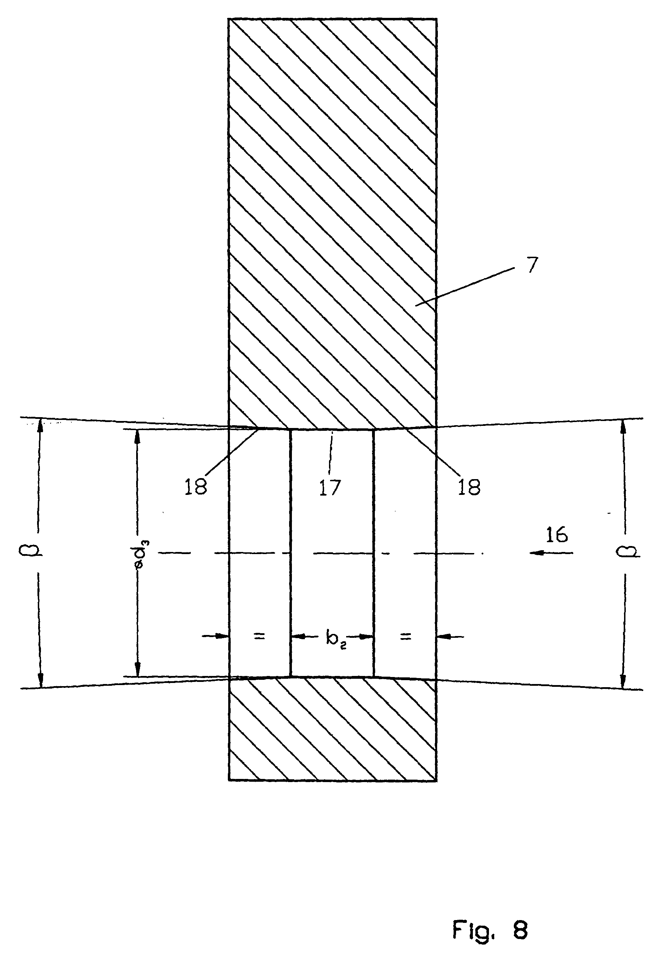

Fig. 8 zeigt einen Schnitt durch die Lasche (7) des Stützlagers (6) gemäß Fig. 7. Der Innendurchmesser (d₃) des zylindrischen Teils (17) der Durchgangsbohrung (16) ist mit dem Außendurchmesser (d₁) der Geräteanschlußachse (2) identisch. In der Mitte der Durchgangsbohrung (16) befindet sich ein zylindrischer Teil (17) mit der Breite (b₂), vorzugsweise von etwa 15 mm. In Richtung der Austrittsöffnungen erweitert sich die Durchgangsbohrung (16) konisch mit dem Kegelwinkel (β) von etwa 2° bis 3°, vorzugsweise 2,5°, und bildet den konischen Teil (18) der Durchgangsbohrung (16).

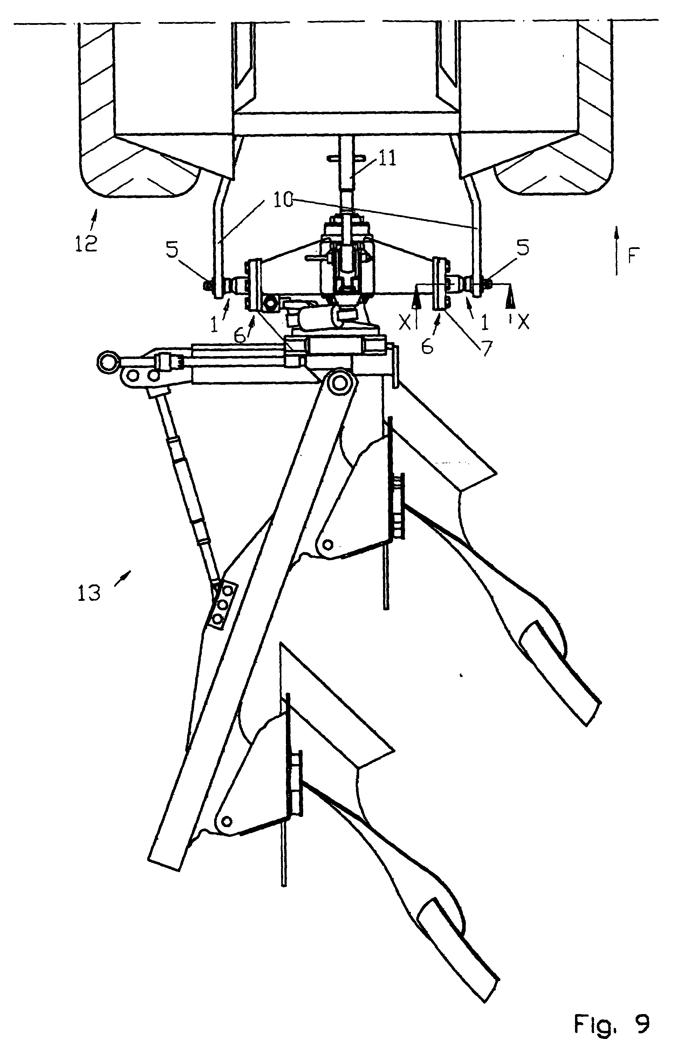

Fig. 9 zeigt eine Draufsicht auf den Drehpflug (13) nach Fig. 1 und die Verbindung des Drehpfluges zum Traktor (12), der sich während der Arbeit des Drehpfluges (13) in Fahrtrichtung (F) bewegt. Die Verbindung zum Drehpflug (13) wird über das traktorseitige Dreipunktgestänge, bestehend aus den beiden Unterlenkern (10) und dem Oberlenker (11), hergestellt.

Analog zu den Beschreibungen der Fig. 4 und Fig. 5 sind weitere, nicht näher beschriebene Konturen der Querschnittsminderung, wie beispielsweise parabolisch verlaufende Konturen oder Mischformen, möglich.

Die Wirkungen der Erfindung treten grundsätzlich bei allen Geräten ein, die durch Unterlenker (10) über die Anschlußvorrichtung (1) mit einem Traktor (12) verbunden werden.

## Patentansprüche

1. Vorrichtung (1) für landwirtschaftliche Geräte (13) zu deren Anschluß an die Unterlenker (10) eines Dreipunktgestänges (10,11) eines Traktors (12) od. dgl. Zugfahrzeugs, bestehend aus einer in Stützlagern (6) des landwirtschaftlichen Gerätes (13) abstützbaren Geräteanschlußachse (2) mit als Unterlenkeranschlußzapfen (5) ausgebildeten freien Enden, **dadurch gekennzeichnet, daß** die Geräteanschlußachse (2) mit einem zwischen den Stützlagern (6) gelegenen, stoßdämpfend elastisch verformbaren Bereich, der einen gegenüber benachbarten Bereichen herabgesetzten Biegewiderstand aufweist, versehen ist, und der Bereich herabgesetzten Biegewiderstands einen gegenüber benachbarten Bereichen verminderten Querschnitt aufweist.

2. Vorrichtung (1) für landwirtschaftliche Geräte (13) zu deren Anschluß an die Unterlenker (10) eines Dreipunktgestänges (10,11) eines Traktors (12) od. dgl. Zugfahrzeugs, bestehend aus einer in Stützlagern (6) des landwirtschaftlichen Gerätes (13) abstützbaren Geräteanschlußachse (2) mit als Unterlenkeranschlußzapfen (5) ausgebildeten freien Enden, **dadurch gekennzeichnet, daß** die Geräteanschlußachse (2) mit einem zwischen den Stützlagern (6) gelegenen, stoßdämpfend elastisch verformbaren Bereich, der einen gegenüber benachbarten Bereichen herabgesetzten Biegewiderstand aufweist, versehen ist, und der Bereich herabgesetzten Biegewiderstands von einem Werkstoff mit einem gegenüber dem Werkstoff benachbarter Bereiche geringeren Elastizitätsmodul gebildet ist.

3. Vorrichtung nach Anspruch 1, **dadurch gekennzeichnet, daß** im Bereich herabgesetzten Biegewiderstands die Querschnittsminderung (3) einen kontinuierlichen Verlauf aufweist.

4. Vorrichtung nach Anspruch 1, **dadurch gekennzeichnet, daß** in dem Bereich herabgesetzten Biegewiderstands die Querschnittsminderung (4) einen abgestuften Verlauf aufweist.

5. Vorrichtung nach einem der Ansprüche 1, 3 oder 4, **dadurch gekennzeichnet, daß** die Geräteanschlußachse (2) in ihrem zwischen den Stützlagern (6) gelegenen Bereich einen kreisrunden Querschnitt aufweist.

6. Vorrichtung nach einem der Ansprüche 1, 3 oder 4, **dadurch gekennzeichnet, daß** die Geräteanschlußachse (2) in ihrem zwischen den Stützlagern (6) gelegenen Bereich einen rechteckigen Querschnitt aufweist.

7. Vorrichtung nach einem der Ansprüche 1 oder 3 bis 6, **dadurch gekennzeichnet, daß** die Querschnittsminderung im Maximum etwa 10 bis 50 % beträgt.

8. Vorrichtung nach einem der Ansprüche 1 bis 7, **dadurch gekennzeichnet, daß** die Geräteanschlußachse (2) in als Radial-Gelenklager (14) ausgebildeten Stützlagern (6) räumlich beweglich gelagert ist.

9. Vorrichtung nach einem der Ansprüche 1 bis 8, **dadurch gekennzeichnet, daß** die Stützlager (6) der Geräteanschlußachse (2) von einer Durchgangsbohrung (16) in einer Lasche (7) gebildet sind, die aus einem zylindrischen Teil (17) und mindestens einem konischen, eine erweiterte Austrittsöffnung der Durchgangsbohrung (16) bildenden Teil (18) besteht, der eine eingeschränkte räumlich bewegliche Lagerung der Geräteanschlußachse (2) zuläßt.

## Claims

1. Device (1) for agricultural devices (13) to be connected to the draft link (10) of a three-point linkage (10,11) of a tractor (12) or a similar pulling vehicle, consisting of a device connection axle (2) supportable in support bearings (6) of the agricultural device (13), with free ends designed as draft link connection journals (5), **characterised in that** the device connection axle (2) is equipped with elastically deformable area of a shock absorbing nature and located between the support bearings (6), the bending resistance of this area being reduced towards neighbouring areas, and the area of the reduced bending resistance having a smaller cross section towards the neighbouring areas.

2. Device (1) for agricultural devices (13) to be connected to the draft link (10) of a three-point linkage (10,11) of a tractor (12) or a similar pulling vehicle, consisting of a device connection axle (2) supportable in support bearings (6) of the agricultural device (13), with free ends designed as draft link connection journals (5), **characterised in that** the device connection axle (2) is equipped with elastically deformable area of a shock absorbing nature and located between the support bearings (6), the bending resistance of this area being reduced towards neighbouring areas, and the area of the reduced bending resistance consisting of a material of a lower modulus of elasticity compared to that of the material of the neighbouring areas.

3. Device according to claim 1, **characterised in that** in the area of the reduced bending resistance the reduction of the cross section (3) is a continuous one.

4. Device according to claim 1, **characterised in that** in the area of the reduced bending resistance the reduction of the cross section (4) is a stepped one.

5. Device according to one of the claims 1, 3 or 4, **characterised in that** the device connection axle (2) has a fully circular cross section in the area between the support bearings (6).

6. Device according to one of the claims 1, 3 or 4, **characterised in that** the device connection axle (2) has a rectangular cross section in the area between the support bearings (6).

7. Device according to one of the claims 1 or 3 to 6, **characterised in that** the maximum reduction in cross section amounts approx. to 10 to 50 %.

8. Device according to one of the claims 1 to 7, **characterised in that** the device connection axle (2) runs in support bearings (6) designed as articulated radial bearings (14) and is spatially movable.

9. Device according to one of the claims 1 to 8, **characterised in that** that the support bearings (6) of the device connection axle (2) are formed by a through-hole (16) in a bracket (7), consisting of a cylindrical part (17) and at least of conical part (18) forming an enlarged outlet opening of the through-hole (16), the latter part allowing a bearing of the device connection axle (2) with limited spatial movement.

## Revendications

1. Dispositif (1) pour des outils agricoles (13), pour leur attelage aux bras inférieurs (10) d'un attelage en trois points (10, 11) d'un tracteur (12) ou autres véhicules de traction, comprenant un axe de raccordement d'outil (2) s'appuyant dans les paliers d'appui (6) de l'outil agricole (3), axe dont les extrémités libres sont réalisées sous la forme de broches de raccordement (5) aux bras inférieurs de l'attelage, **caractérisé en ce que** l'axe de raccordement de l'outil (2) comporte une zone déformable élastiquement, fonctionnement comme amortisseur, entre les paliers d'appui (6), cette zone ayant une résistance en flexion réduite par rapport à celle des zones voisines, et la zone de résistance à la flexion, réduite, a une section diminuée par rapport aux zones voisines.

2. Dispositif (1) pour un outil agricole (13), pour son attelage aux bras inférieurs (10) d'un attelage en trois points (10, 11) d'un tracteur (12) ou autres véhicules de traction, comprenant un axe de raccordement d'outil (2) pour supporter l'outil agricole (13) dont les extrémités libres forment des tourillons de raccordement des bras inférieurs (5), **caractérisé en ce que** l'axe de raccordement d'outil (2) comporte une zone déformable élastiquement, à effet amortissant, située entre les paliers d'appui (6), cette zone ayant une résistance à la flexion réduite par rapport à celle des zones voisines et la zone de résistance à la flexion réduite est réalisée en un matériau ayant un module d'élasticité plus faible que celui des zones voisines.

3. Dispositif selon la revendication 1, **caractérisé en ce que** dans la zone de résistance à la flexion réduite, la réduction de section (3) a un profil continu.

4. Dispositif selon la revendication 1, **caractérisé en ce que** dans la zone de résistance à la flexion réduite, la réduction de section (4) a un profil étagé.

5. Dispositif selon l'une quelconque des revendications 1, 3, 4, **caractérisé en ce que** l'axe de raccordement d'outil (2) présente une section circulaire dans sa zone située entre les paliers d'appui (6).

6. Dispositif selon l'une quelconque des revendications 1 à 3 ou 4, **caractérisé en ce que** l'axe de raccordement d'outil (2) présente une section rectangulaire dans sa zone comprise entre les paliers d'appui (6).

7. Dispositif selon l'une quelconque des revendications 1 ou 3 à 6, **caractérisé en ce que** la réduction de section correspond au maximum à 10-50 %.

8. Dispositif selon l'une quelconque des revendications 1 à 7, **caractérisé en ce que** l'axe de raccordement d'outil (2) est monté mobile dans des paliers d'appui (6) en forme de contre-paliers à rotule (14).

9. Dispositif selon l'une quelconque des revendications 1 à 8, **caractérisé en ce que** les paliers d'appui (6) de l'axe de raccordement d'outil (2) sont formés par un perçage traversant (16) dans une patte (7), cette patte comprenant une partie cylindrique (17) et au moins une partie (18) conique, formant un orifice de sortie élargi du perçage traversant (16), permettant un montage de l'axe de raccordement de l'outil (2) avec un mouvement limité dans l'espace.
